# EUROPEAN PATENT SPECIFICATION

(11) **EP 0 429 072 B1**
(45) Date of publication and mention of the grant of the patent: **25.01.1995**
(21) Application number: 90122220.8
(22) Date of filing: 20.11.1990
(51) Int. Cl.: H04N 1/32

(54) **Facsimile store-and-forward switching system**
Faksimiledurchschaltvermittlungssystem mit Speicherung und Weiterbeförderung
Système de commutation de fac-similé à stockage et réexpédition

(30) Priority: 24.11.1989 JP 305302/89
(43) Date of publication of application: 29.05.1991
(73) Proprietor: MITSUBISHI DENKI KABUSHIKI KAISHA, Tokyo (JP)
(72) Inventor: Osada, Akio, Computer Seisakusho,, Kamakura-shi, Kanagawa-ken (JP)
(74) Representative: Pfenning, Meinig & Partner

(56) References cited:
- GB-A- 2 208 987
- PATENT ABSTRACTS OF JAPAN vol. 11, no. 7 (E-469)9 January 1987 & JP-A-61 182 370 (RICOH CO LTD) 15 August 1986
- PATENT ABSTRACTS OF JAPAN vol. 10, no. 340 (E-455) 18 November 1986& JP-A-61 144 164 (RICOH CO LTD) 1 July 1986
- PATENT ABSTRACTS OF JAPAN vol. 13, no. 164 (E-745)19 June 1987 & JP-A-63 316 560 (RICOH CO LTD) 23 DEcember 1988
- PATENT ABSTRACTS OF JAPAN vol. 9, no. 113 (P-356)(1836) 17 May 1985& JP-A-60 000 385 (SONY K.K.) 5 January 1985

## Description

This invention relates to a facsimile store-and-forward switching system and method which takes account of summer time (daylight-saving time) in determination of time differences between countries when constructing an international telecommunication network.

As demands for telecommunication with foreign countries have increased, the difference in standard time between countries has become important.

Japanese Patent Public Disclosure No. 182370/1986 discloses a facsimile system which includes a time difference memory storing time difference information and inserts data of the time on the transmission side and the local time on the reception side into a picture signal to be transmitted in accordance with the time difference information.

Japanese Patent Public Disclosure No. 144164/1986 discloses a facsimile telecommunication data display system wherein each facsimile in communication with each other derives time difference information from data transmitted by the other sides facsimile and displays the local times of both transmitter receiver sides.

Japanese Patent Public Disclosure No. 227156/1988 discloses a telephone set capable of displaying a local time of an area dialed.

Japanese Patent Public Disclosure No. 53289/1989 discloses a time clock capable of automatically changing the time during the summer time period the first and last day of which is indicated. Summer time can be selected for only one country.

Japanese Patent Public Disclosure No. 267689/1987 discloses a clock capable of displaying a summer time in response to activation of a summer time indicating switch.

Finally, Japanese Patent Public Disclosure No. 292462/1986 discloses a charging data acquisition system for a telephone exchange wherein the time is automatically changed from winter time to summer time and vice versa upon the indicated day or time.

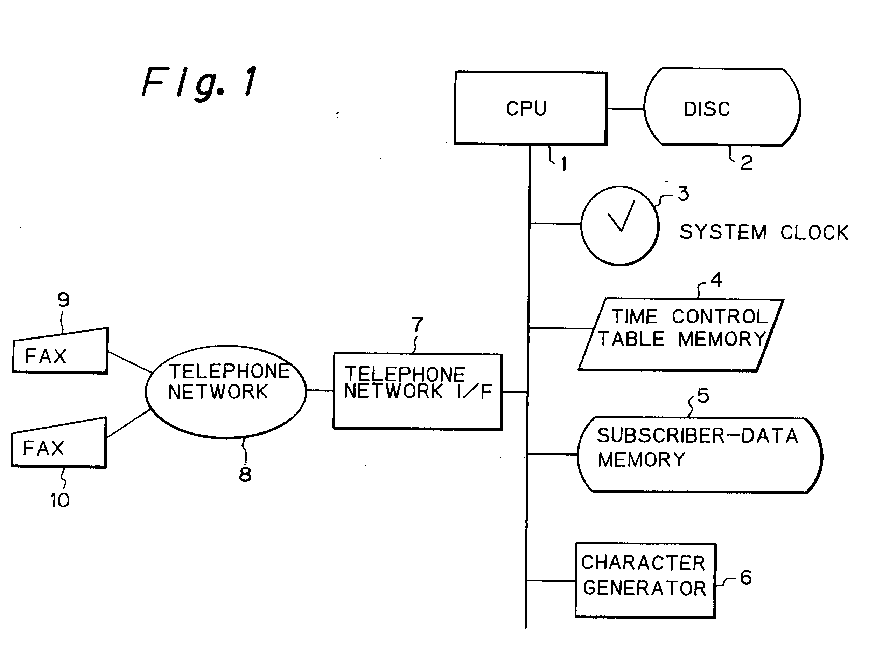

Figs. 1 - 5 show an exemplary arrangement of the prior art facsimile store-and-forward switching system which takes into consideration a time difference.

Fig. 1 is a block diagram showing the facsimile store-and-forward switching system which comprises a central processing unit (CPU) 1, a disc 2, a system clock 3, a memory 4 storing a time control table, a memory 5 storing data relating to subscribers, a character generator 6, and an interface (I/F) 7 for a telephone network 8. To the telephone network, a plurality of facsimile (FAX) terminals, here two facsimile terminals 9, 10, are connected.

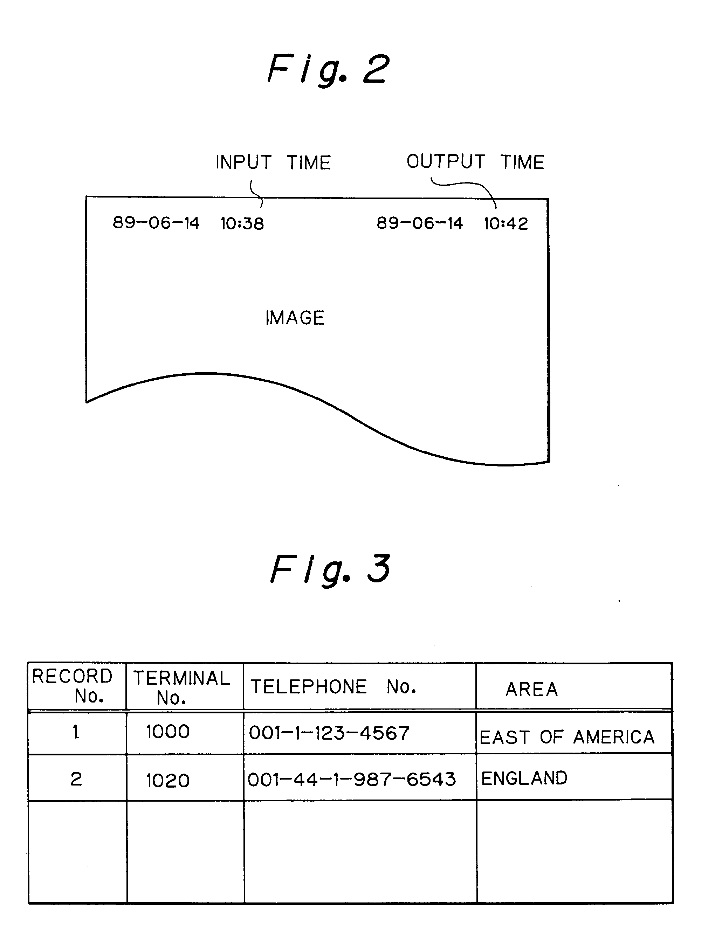

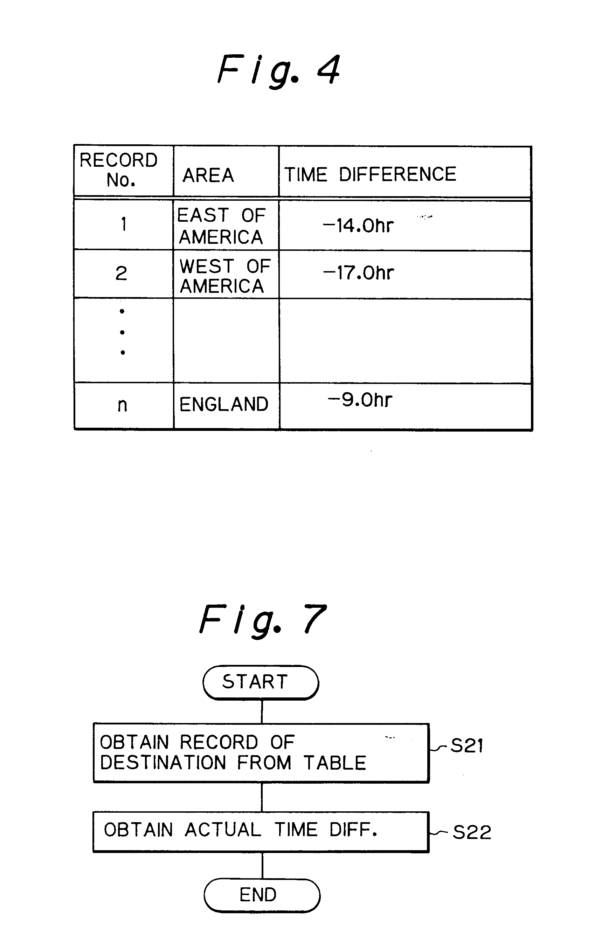

Fig. 2 shows a copy duplicated on paper in a receiving facsimile terminal. An input time and an output time are printed on the paper at the time of copying by the facsimile store-and-forward switching system. Fig. 3 shows data stored in the subscriber-data memory 5 and Fig. 4 shows data stored in the time control table memory 4.

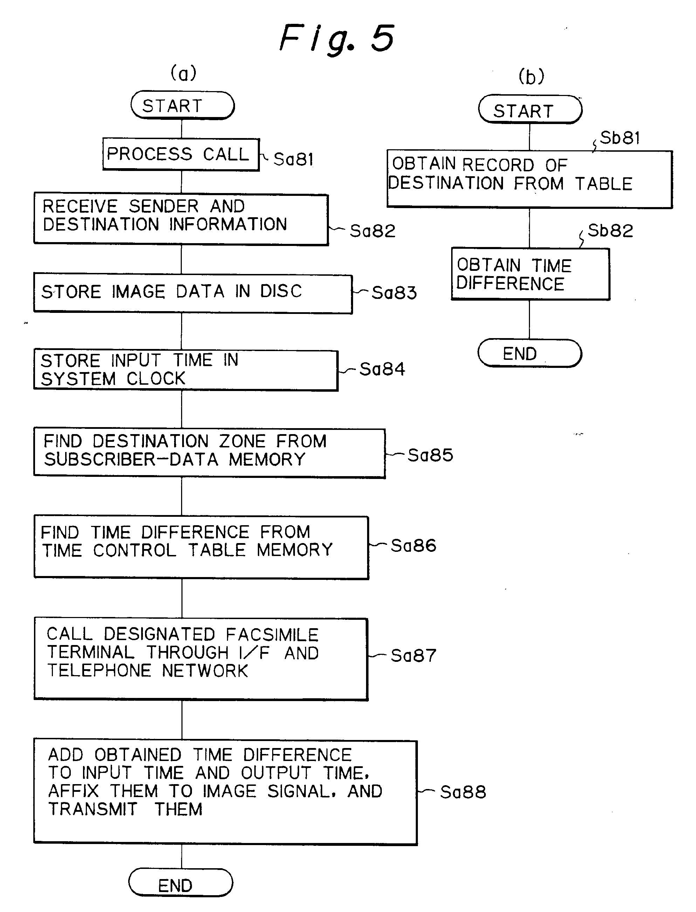

The operation will be described with reference to the flowchart shown in Fig. 5(a). When there is a call, (Sa81), the facsimile store-and-forward switching system responds to a call to receive information to be transmitted and destination information inputted by using push-buttons or an OMR (optical mark reader) sheet at the transmitting facsimile terminal 9 or 10 and transmitted through the telephone network 8 and the telephone network I/F 7 (Sa82). Subsequently, the switching system stores image data in the disc 2 (Sa83) and stores the input time in the system clock 3 (Sa84). An input process has now been completed.

In an output process, first, the area of the destination is found from the subscriber's data in the memory 5 shown in Fig. 3 (Sa85). Next, the time difference between the locations (time zones) of the sender and the receiver is obtained from the time control table shown in Fig. 4 (Sa86). Next, the switching system calls the facsimile terminal designated by the transmitting facsimile (Sa87). Then, the switching system adds the obtained time difference to the input time and an output time (the current time indicated by the system clock 3) to derive the input and output times calculated in terms of the local time of the receiving facsimile terminal (Sa88). The image data stored in the disc 2 is transmitted to the receiving facsimile with the calculated times affixed, whereby the input time and the output time changed to the local time are recorded on the top of a paper on which the transmitted image is duplicated, as shown in Fig. 2.

The process in the step Sa86 is executed in accordance with a subroutine shown in Fig. 5(b), wherein the record is obtained from the time control table shown in Fig. 4 (Sb81) and the time difference is found (Sb82).

In such a conventional facsimile store-and-forward switching system as described above, the time control table stored in the memory 4 was fixed and summer time was not considered in the time difference. If an operator wishes to take account of summer time, it is very troublesome to change the time difference for each zone each time summer time begins and ends.

In view of the above problems, the object of the invention is to provide a facsimile store-and-forward switching system and method capable of keeping the correct local time for each area by automatically changing the time difference each time the summer time for each area begins and ends in accordance with prestored data relating to the summer time for each area.

According to one aspect of the invention, there is provided a facsimile store-and-forward switching system which stores an input time upon receiving a call, detects the area of the destination from subscriber's data given by the transmitting terminal, calls a terminal designated by the transmitting terminal, adds the time difference stored in a time control table to the input time and an output time, and transmits an image signal with the calculated times to the receiving terminal, wherein a summer time period and a summer time deviation for each of the areas are stored in said time control table and it is determined every hour on the hour whether the location of the receiving terminal is subject to summer time, and obtains the time difference while taking account of any possible deviation due to summer time.

With such an arrangement, when it is found by means of a time difference modifying means which is energized every hour on the hour that the area in which a receiving terminal is located is subject to summer time, the correct local time is obtained in accordance with the summer time deviation and recorded on paper on which a transmission is duplicated.

To facilitate understanding of the invention, reference is made to the accompanying drawings, in which:
Fig. 1 is a block diagram showing the prior art facsimile store-and-forward switching system;
Fig. 2 shows an example of a copy duplicated on a paper of a receiving facsimile terminal;
Fig. 3 shows an example of data stored in the subscriber-data memory;
Fig. 4 shows an example of data stored in the time control table memory;
Fig. 5 is a flowchart for explaining the processing steps in the prior art facsimile store-and-forward switching system;
Figs. 6 and 7 are flowchart for explaining an embodiment of the invention; and
Fig. 8 shows an example of data stored in a time control table memory according to the invention.

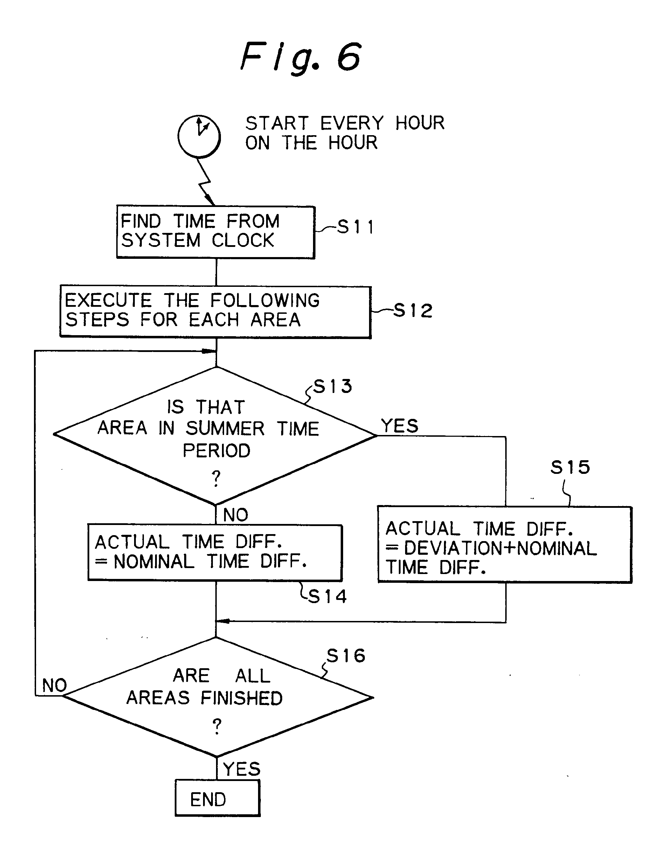

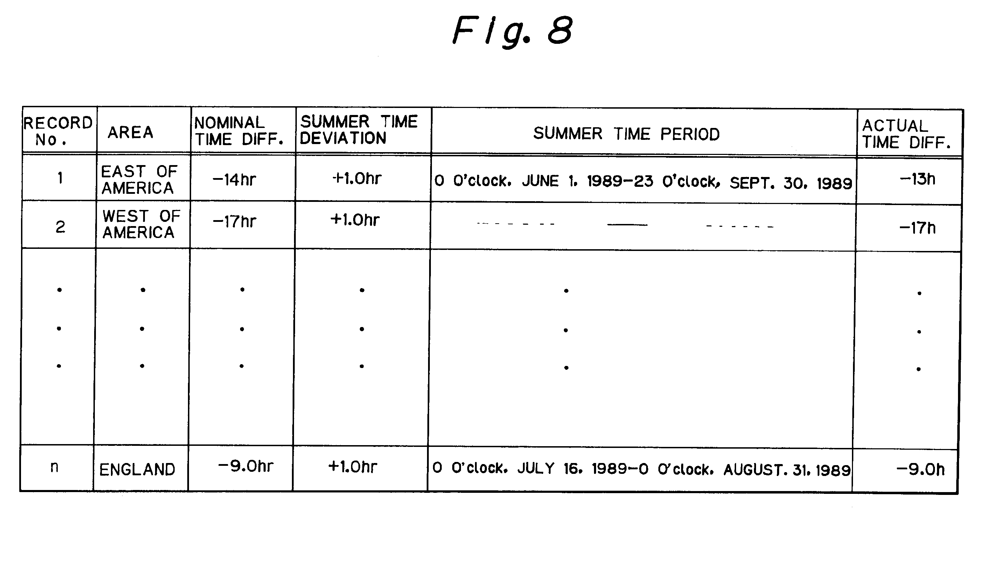

Fig. 6 is a flowchart explaining the operation of updating a time control table stored in the time control table memory 4 shown in Fig. 1. Fig. 7 is a flowchart for explaining the process of obtaining a time difference in comparison to Fig. 5(b). Fig. 8 shows an example of contents in the time control table memory.

According to the invention, as shown in Fig. 8, the time control table includes area information, a nominal time difference between the system clock and the local time of the area of a facsimile terminal, a summer time deviation indicating the extent of time deviation from the local time during the summer time, a summer time period predetermined by the operator, and an actual time difference for each of the recorded numbers.

The facsimile store-and-forward switching system according to the invention operates as shown in the flowcharts in Figs. 6 and 7 so that the input and output times to be printed on the head of a sheet of paper for duplicating the transmitted image at the receiving side are automatically changed during summer time.

As shown in Fig. 6, the switching system starts every hour on the hour to find the system time from the system clock (S11) and determines whether each area in the time control table (Fig. 8) is subject to a summer time period (S12, S13). If not, the nominal time difference is set as the actual time difference (S14). If summer time applies, the actual time difference is the nominal time difference plus the summer time deviation (S15). Thus, the time control table is automatically updated.

When an image signal stored in the disc is required to be transmitted to a receiving facsimile terminal, the input and output times to be added to the image signal are obtained as shown in Fig. 7. More particularly, the record relating to the area of the receiving facsimile terminal is obtained from the time control table (S21) and the actual time difference is obtained (S22).

As described above, according to the invention, since the time difference is automatically updated in consideration of summer time, the operator can avoid the troublesome task of changing the time difference when the summer time begins or ends, whereby the correct time difference can be easily obtained.

Although the present invention is described with reference to a certain embodiment, it will be apparent to those skilled in the art that various alterations and modifications can be made within the scope of the invention.

## Claims

1. In a facsimile store-and-forward switching system which stores an input time upon receiving a call, detects the area of a destination facsimile terminal from data relating to the subscribers, calls the destination facsimile terminal, adds the time difference stored in a time control table to the input time and an output time, and transmits the input and output times together with an image signal to the destination, an improvement comprising the time control table including a summer time period and a summer time deviation for each area and a time difference changing means actuated every hour on the hour for determining whether the destination area is in the summer time period and for finding the actual time difference by taking account of the summer time deviation during summer time.

2. An improvement as set forth in Claim 1 wherein said time control table stores a nominal time difference between the system clock and the local time of an area, the summer time deviation indicating the extent of time deviation from the local time during summer time, the summer time period, and an actual time difference for each area.

3. An improvement as set forth in Claim 2 wherein the actual time difference is the nominal time difference when the area is subject to summer time and the actual time difference is the nominal time difference plus the summer time deviation.

4. An improvement as set forth in Claim 3 wherein the actual time difference is updated every hour on the hour.

5. A method of operating a facsimile store-and-forward switching system which stores an input time upon receiving a call, detects the area of a destination facsimile terminal from data relating to the subscribers, calls the destination facsimile terminal, adds the time difference stored in a time control table to the input time and an output time, and transmits the input and output times together with an image signal to the destination, said method including a method of changing the time difference comprising the steps of:
storing a summer time period and a summer time deviation which indicates the extent of time deviation from a nominal time difference during the summer time period; and
changing the nominal time difference to an actual time difference in accordance with the summer time deviation during the summer time period.

6. A method as set forth in Claim 5 wherein the step of changing the nominal time difference comprises the steps of setting the nominal time difference as the actual time difference when the destination area is not in the summer time period and adding the summer time deviation to the nominal time difference when the destination area is in the summer time period.

7. A method as set forth in Claim 6 wherein the step of changing the nominal time difference is repeated every hour on the hour.

## Patentansprüche

1. Faksimiledurchschaltvermittlungssystem mit Speicherung und Weiterbeförderung, das bei Empfang eines Rufes eine Eingangszeit speichert, den Bereich eines Bestimmungs-Faksimileanschlusses aus von auf die Teilnehmer bezogenen Daten erfaßt, den Bestimmungs-Faksimileanschluß ruft, die in einer Zeitsteuertabelle gespeicherte Zeitdifferenz zu der Eingangszeit und einer Ausgangszeit addiert und die Eingangs- und Ausgangszeit zusammen mit einem Bildsignal zum Bestimmungsort überträgt, in welchem eine Verbesserung eine Zeitsteuertabelle aufweist, die eine Sommerzeitperiode und eine Sommerzeitabweichung für jeden Bereich und Zeitdifferenzänderungsmittel enthält, die immer zur vollen Stunde betätigt werden zur Feststellung, ob der Bestimmungsbereich in der Sommerzeitperiode liegt, und zum Finden der tatsächlichen Zeitdifferenz durch Berücksichtigung der Sommerzeitabweichung während der Sommerzeit.

2. Verbesserung nach Anspruch 1, worin die Zeitsteuertabelle eine nominelle Zeitdifferenz zwischen der Systemuhr und der örtlichen Zeit eines Bereiches, die das Ausmaß der Zeitabweichung von der örtlichen Zeit während der Sommerzeit anzeigende Sommerzeitabweichung, die Sommerzeitperiode und eine tatsächliche Zeitdifferenz für jeden Bereich speichert.

3. Verbesserung nach Anspruch 2, worin die tatsächliche Zeitdifferenz die nominelle Zeitdifferenz ist, wenn der Bereich der Sommerzeit unterworfen ist, und die aktuelle Zeitdifferenz die nominelle Zeitdifferenz plus der Sommerzeitabweichung ist.

4. Verbesserung nah Anspruch 3, worin die aktuelle Zeitdifferenz zu jeder vollen Stunde aktualisiert wird.

5. Verfahren zum Betrieb eines Faksimiledurchschaltvermittlungssystems mit Speicherung und Weiterbeförderung, das bei Empfang eines Rufes eine Eingangszeit speichert, den Bereich eines Bestimmungs-Faksimileanschlusses aus von auf die Teilnehmer bezogenen Daten erfaßt, den Bestimmungs-Faksimileanschluß ruft, die in einer Zeitsteuertabelle gespeicherte Zeitdifferenz zu der Eingangszeit und einer Ausgangszeit addiert und die Eingangs- und Ausgangszeit zusammen mit einem Bildsignal zum Bestimmungsort überträgt, welches Verfahren zur Änderung der Zeitdifferenz die Schritte aufweist:
Speichern einer Sommerzeitperiode und einer Sommerzeitabweichung, die das Ausmaß der Zeitabweichung von einer nominellen Zeitdifferenz während der Sommerzeitperiode anzeigt; und
Ändern der nominellen Zeitdifferenz zu einer aktuellen Zeitdifferenz gemäß der Sommerzeitabweichung während der Sommerzeitperiode.

6. Verfahren nach Anspruch 5, worin der Schritt des Änderns der nominellen Zeitdifferenz die Schritte des Einstellens der nominellen Zeitdifferenz als der tatsächlichen Zeitdifferenz, wenn der Bestimmungsbereich nicht in der Sommerzeitperiode ist, und des Addierens der Sommerzeitabweichung zu der nominellen Zeitdifferenz, wenn der Bestimmungsbereich in der Sommerzeitperiode ist, aufweist.

7. Verfahren nach Anspruch 6, worin der Schritt des Änderns der nominellen Zeitdifferenz zu jeder vollen Stunde wiederholt wird.

## Revendications

1. Système de commutation de télécopies à stockage et envoiamélioré susceptible de stocker une heure d'entrée lors de la réception d'un appel, de détecter la zone du terminal d'un télécopieur de destination à partir de données d'abonnés, d'appeler le terminal du télécopieur de destination, d'ajouter le décalage horaire stocké dans une table de réglage d'heure à l'heure d'entrée et à une heure de sortie, et de transmettre les heures d'entrée et de sortie conjointement avec un signal d'image à la destination, l'amélioration comprenant le fait que la table de réglage d'heure qui comporte une période d'heure d'été et un écart d'heure d'été pour chaque région et un moyen de modification du décalage horaire qui intervient d'heure en heure pour déterminer si la zone de destination est dans la période d'heure d'été et pour trouver le décalage horaire réel en tenant compte de l'écart d'heure d'été au cours de l'heure d'été.

2. Système amélioré selon la revendication 1, dans lequel ladite table de réglage d'heure stocke un décalage horaire nominal entre l'horloge du système et l'heure locale d'une zone, l'écart d'heure d'été indiquant l'écart horaire vis-à-vis de l'heure locale pendant l'heure d'été, la période d'heure d'été et un décalage horaire réel pour chaque zone.

3. Système amélioré selon la revendication 2, dans lequel le décalage horaire réel est le décalage horaire nominal lorsque la zone est soumise à l'heure d'été et le décalage horaire réel est le décalage horaire nominal plus l'écart d'heure d'été.

4. Système amélioré selon la revendication 3, dans lequel le décalage horaire réel est mis à jour d'heure en heure.

5. Procédé de fonctionnement d'un système de commutation de télécopies à stockage et envoi susceptible de stocker une heure d'entrée lors de la réception d'un appel, de détecter la zone du terminal d'un télécopieur de destination à partir de données d'abonnés, d'appeler le terminal du télécopieur de destination, d'ajouter le décalage horaire stocké dans une table de réglage d'heure à l'heure d'entrée et à une heure de sortie, et de transmettre les heures d'entrée et de sortie conjointement avec un signal d'image à la destination, ledit procédé comprenant les stades suivants :
on stocke une période d'heure d'été et un écart d'heure d'été qui indique l'écart horaire vis-à-vis d'un décalage horaire nominal au cours de la période d'heure d'été, et
on modifie le décalage horaire nominal en décalage horaire réel selon l'écart d'heure d'été au cours de la période d'heure d'été.

6. Procédé selon la revendication 5, dans lequel le stade de modification du décalage horaire nominal comprend les étapes d'utiliser le décalage horaire nominal comme décalage horaire réel lorsque la zone de destination n'est pas en période d'heure d'été et d'ajouter l'écart d'heure d'été au décalage horaire nominal lorsque la zone de destination est en période d'heure d'été.

7. Procédé selon la revendication 6, dans lequel le stade de modification du décalage horaire nominal est répété d'heure en heure.
